(19) Europäisches Patentamt
European Patent Office
Office européen des brevets

(11) EP 4 551 328 B1

(12) **EUROPÄISCHE PATENTSCHRIFT**

(45) Veröffentlichungstag und Bekanntmachung des Hinweises auf die Patenterteilung:
**20.05.2026 Patentblatt 2026/21**

(21) Anmeldenummer: **23736116.7**

(22) Anmeldetag: **29.06.2023**

(51) Internationale Patentklassifikation (IPC):
***B01J 27/26*** (2006.01) ***B01J 31/02*** (2006.01)
***B01J 31/06*** (2006.01) ***B01J 31/22*** (2006.01)
***B01J 37/03*** (2006.01) ***B01J 37/04*** (2006.01)
***C08G 65/26*** (2006.01)

(52) Gemeinsame Patentklassifikation (CPC):
**B01J 27/26; B01J 31/0202; B01J 31/068; B01J 31/2208; B01J 37/033; B01J 37/04; C08G 65/2609; C08G 65/2663;** B01J 2531/0288; B01J 2531/26; B01J 2531/845

(86) Internationale Anmeldenummer:
**PCT/EP2023/067804**

(87) Internationale Veröffentlichungsnummer:
**WO 2024/008546 (11.01.2024 Gazette 2024/02)**

(54) **VERFAHREN ZUR HERSTELLUNG VON DOPPELMETALLCYANID-KATALYSATOREN**
PROCESS FOR PREPARING DOUBLE METAL CYANIDE CATALYSTS
PROCÉDÉ DE FABRICATION DE CATALYSEURS À BASE DE CYANURE MÉTALLIQUE DOUBLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.07.2022 EP 22182777**

(43) Veröffentlichungstag der Anmeldung:
**14.05.2025 Patentblatt 2025/20**

(73) Patentinhaber: **Covestro Deutschland AG**
**51373 Leverkusen (DE)**

(72) Erfinder:
- **HOFMANN, Joerg**
  **47800 Krefeld (DE)**
- **GLEIXNER, Maria**
  **47906 Kempen (DE)**
- **ASMA, Thomas**
  **47918 Tönisvorst (DE)**
- **SANDER, Philipp**
  **41516 Grevenbroich (DE)**

(74) Vertreter: **Levpat**
**c/o Covestro AG**
**Gebäude K12**
**51365 Leverkusen (DE)**

(56) Entgegenhaltungen:
**US-A1- 2006 058 482**

- **LEE I K ET AL: "Effect of complexing agents of double metal cyanide catalyst on the copolymerizations of cyclohexene oxide and carbon dioxide", CATALYSIS TODAY, ELSEVIER, AMSTERDAM, NL, vol. 148, no. 3-4, 30 November 2009 (2009-11-30), pages 389 - 397, XP026777558, ISSN: 0920-5861, [retrieved on 20090811], DOI: 10.1016/J.CATTOD.2009.07.073**

EP 4 551 328 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein verbessertes Verfahren zur Herstellung von Doppelmetall-cyanid (DMC)-Katalysatoren für die Herstellung von Polyoxyalkylenpolyolen, bevorzugt Polyetherpolyolen und/oder Polyethercarbonatpolyolen. Ein weiterer Gegenstand sind DMC-Katalysatoren, welche erhältlich über dieses Verfahren sind sowie die Verwendung der erfindungsgemäßen Katalysatoren zur Herstellung von Polyoxyalkylenpolyolen.

DMC-Katalysatoren sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310, WO 00/47649, und WO 2021/165283 A1 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

In WO 01/39883 A1 wird ein Verfahren zur Herstellung von Doppelmetall-cyanid(DMC)-Katalysatoren für die Herstellung von Polyetherpolyolen durch Poly-addition von Alkylenoxiden an aktive Wasserstoffatome aufweisende Starterverbin¬dungen offenbart, bei dem die Herstellung der DMC-Katalysatordispersion unter Einsatz einer Mischdüse, bevorzugt eines Strahldispergators erfolgt. Die so hergestellten DMC-Katalysatoren besitzen bei der Polyetherpolyol-Herstellung erhöhte Aktivität, reduzierte Teilchengröße und engere Teilchengrößenverteilung.

In WO 01/80994 A1 wird ebenfalls ein Verfahren zur Herstellung von Doppelmetallcyanid (DMC)-Katalysatoren offenbart, bei dem zunächst wässrige Lösungen eines Metallsalzes und eines Metall¬cyanid¬salzes in Gegenwart eines organischen Komplexliganden und ggf. einer oder mehrerer weiterer komplexbildender Komponenten unter Bildung einer DMC-Katalysatordispersion umgesetzt werden, diese Dispersion dann filtriert, der Filter-kuchen anschließend mit einer oder mehreren, wässrigen oder nichtwässrigen Lösungen des organischen Komplexliganden und ggf. einer oder mehreren weiteren komplex¬bildenden Komponenten durch Filterkuchenwäsche gewaschen wird und der gewaschene Filterkuchen abschließend nach einem optionalen Auspressen bzw. mechanischen Entfeuchten getrocknet wird. Das offenbarte Verfahren verkürzt die Zeit für die Katalysatorherstellung, wobei die resultierenden Katalysatoren vergleichbare Aktivitäten in der Herstellung von Polyetherpolyolen im Vergleich zu Referenzkatalysatoren besitzen.

EP 700 949 A2 beschreibt einen DMC-Katalysator, enthaltend DMC-Verbindung, einen organischen Komplexliganden und 5 - 80 Gew.-% eines Polyethers mit einem zahlenmittleren Molekulargewicht > 500 g/mol, wobei die Herstellung der DMC-Katalysatordispersion bei Raumtemperatur erfolgt. Die verwendeten Katalysatoren besitzen grundsätzlich eine Aktivität in der Herstellung von Polyetherpolyolen.

In WO 2021/148272 A1 wird ein Verfahren zur Herstellung eines Doppelmetallcyanid-Katalysators (DMC) offenbart, wobei die resultierenden DMC-Katalysatoren eine erhöhte katalytische Aktivität in der Herstellung von Polyoxyalkylenpolyolen, beispielsweise bei der Katalysatortestung gemäß des "8K Diol Stressed Tests", aufweisen. Hierbei erfolgt die Umsetzung einer wässrigen Lösung eines cyanidfreien Metallsalzes, einer wässrigen Lösung eines Metallcyanidsalzes, eines organischen Komplexliganden sowie Polypropylenglykol als komplexbildender Komponente unter Bildung einer Dispersion, wobei die Umsetzung unter Einsatz einer Mischdüse erfolgt und wobei die Prozesstemperatur der Dispersion bei der Umsetzung zwischen 26°C und 49°C ist.

Aufgabe der vorliegenden Anmeldung war es, ein verbessertes Verfahren zur Herstellung von Doppelmetallcyanid (DMC)-Katalysatoren mit weiter erhöhter katalytischer Aktivität in der Herstellung von Polyoxyalkylenpolyolen, bevorzugt Polyetherpolyolen und/oder Polyethercarbonatpolyolen, bereitzustellen, wobei diese verbesserte Aktivität beispielsweise bei der Katalysatortestung im semi-batch Polyol-Herstellungsprozess gemäß des "8K Diol Stressed Tests", der z.B. in WO 98/16310 A1 beschrieben wird, aber auch im kontinuierlichen Polyol-Herstellungsprozess zu einer reduzierten Produktviskosität führt. Ziel war es somit, katalytisch aktivere DMC Katalysatoren bereitzustellen, welche zu Polyoxyalkylenpolyolen, bevorzugt Polyetherpolyolen und/oder Polyethercarbonatpolyolen, mit einer reduzierten Viskosität führen, was die weitere Verarbeitbarkeit der Polyoxyalkylenpolyole in der nachfolgenden Polyurethanisierungsreaktion erleichtert. Die erhöhte Katalysatoraktivität ermöglicht außerdem die Reduktion der eingesetzten Katalysatormenge, was die Wirtschaftlichkeit des Prozesses verbessert.

Gleichzeitig soll der Herstellungsprozess der DMC-Katalysatordispersion mit einem vergleichbar einfachen apparativen Aufbau, einem niedrigen Energieaufwand bei der Scherung, einer guten Temperaturkontrolle, sowie einer ebenfalls guten Aufskalierbarkeit gegenüber bekannten technischen Verfahren erfolgen, um eine einfache Implementierung in bestehende DMC-Katalysator-Herstellungsverfahren, beispielsweise in Schlaufenreaktoren zu ermöglichen.

Überraschenderweise wurde nun gefunden, dass ein Verfahren zur Herstellung eines Doppelmetallcyanid-Katalysators (DMC) umfassend

i) Umsetzung einer wässrigen Lösung eines cyanidfreien Metallsalzes, einer wässrigen Lösung eines Metallcyanidsalzes, eines organischen Komplexliganden sowie einer komplexbildenden Komponente, dadurch gekennzeichnet, dass die komplexbildende Komponente eine oder mehrere Verbindungen (1) der Formel (I) enthält:

$$R_1\text{-O-}(R_2\text{-O})_n\text{-H} \qquad \text{(I)}$$

mit

$R_1$ einer substituierten oder unsubstituierten Arylgruppe
$R_2$ einer Alkylengruppe, bevorzugt einer Ethylengruppe oder Isopropylengruppe, besonders bevorzugt Ethylengruppe (Et), und
$n \geq 1$, bevorzugt $5 \leq n \leq 80$, besonders bevorzugt $7 \leq n \leq 70$, ganz besonders bevorzugt $8 \leq n \leq 60$, die oben genannte Aufgabe löst.

Die Erfindung wird nachfolgend ausgeführt, wobei die erfindungsgemäßen Ausführungsformen beliebig miteinander kombiniert werden können, insofern sich aus dem technischen Kontext nicht das Gegenteil ergibt.

*Komplexbildende Komponente*

Verbindung (1)

Erfindungsgemäß enthält die komplexbildende Komponente eine oder mehrere Verbindungen (1) der Formel (I):

$$R_1\text{-O-}(R_2\text{-O})_n\text{-H} \qquad \text{(I)}$$

mit

$R_1$ einer substituierten oder unsubstituierten Arylgruppe,
$R_2$ einer Alkylengruppe, bevorzugt einer Ethylengruppe oder Isopropylengruppe, besonders bevorzugt Ethylengruppe (Et), und
$n \geq 1$, bevorzugt $5 \leq n \leq 80$, besonders bevorzugt $7 \leq n \leq 70$, ganz besonders bevorzugt $8 \leq n \leq 60$.

In einer Ausführungsform des erfindungsgemäßen Verfahrens weist $R_1$ eine Struktur gemäß Formel (II) auf:

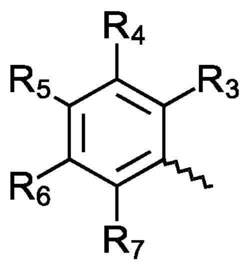

(II)

mit $R_3$, $R_4$, $R_5$, $R_6$, $R_7$ unabhängig voneinander ausgewählt aus der Gruppe bestehend aus Wasserstoff linearen oder verzweigten Alkylgruppen mit 1 bis 22 Kohlenstoff-Atomen, cycloaliphatischen Gruppen enthaltend 3 bis 22 Kohlenstoff-Atome und substituierten oder unsubstituierten Arylgruppen mit 6 bis 16 Kohlenstoff-Atomen.

In einer bevorzugten Ausführungsform des erfindungsgemäßen Verfahrens sind $R_3$, $R_5$, $R_7$ unabhängig voneinander ausgewählt aus der Gruppe bestehend aus Wasserstoff, linearen oder verzweigter Alkylgruppen mit 1 bis 22 Kohlenstoff-Atomen, cycloaliphatischen Gruppen enthaltend 3 bis 22 Kohlenstoff-Atome und substituierten oder unsubstituierten Arylgruppen mit 6 bis 16 Kohlenstoff-Atomen und $R_4$ und $R_6$ ist Wasserstoff.

In einer besonders bevorzugten Ausführungsform des erfindungsgemäßen Verfahrens sind $R_3$, $R_5$, $R_7$ unabhängig voneinander ausgewählt aus der Gruppe bestehend aus linearen oder verzweigter Alkylgruppen mit 1 bis 10 Kohlenstoff-Atomen und substituierten oder unsubstituierten Arylgrupper mit 6 bis 12 Kohlenstoff-Atomen und $R_4$ und $R_6$ ist Wasserstoff.

In einer Ausführungsform des erfindungsgemäßen Verfahrens weist $R_1$ eine Struktur gemäß Formel (III), (IV) oder (V) auf:

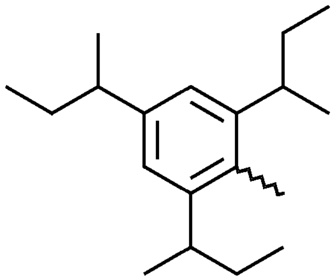

(III)

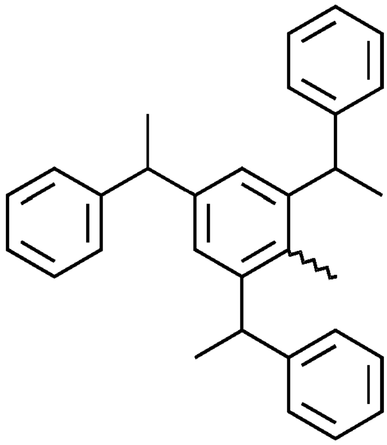

(IV)

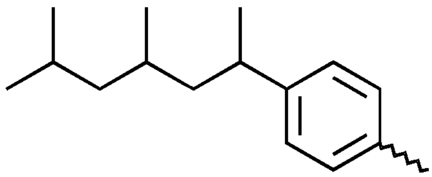

(V)

In einer bevorzugten Ausführungsform des erfindungsgemäßen Verfahrens weist $R_1$ eine Struktur gemäß Formel (III) auf.

In einer Ausführungsform des erfindungsgemäßen Verfahrens weist die Verbindung (1) eine Struktur gemäß Formel (VI), (VII) und/oder (VIII) auf:

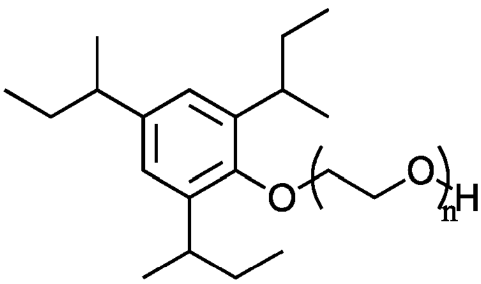

(VI)

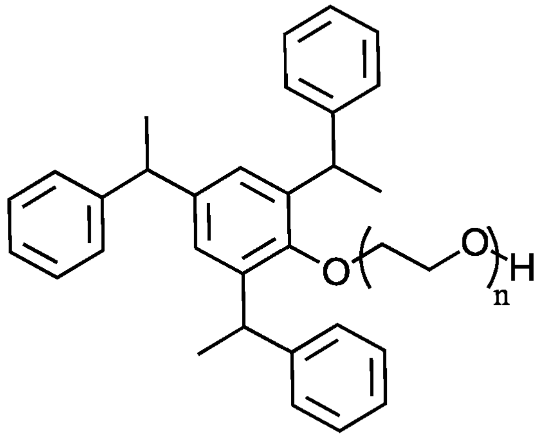

(VII)

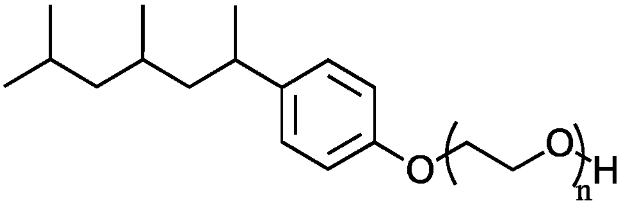

(VIII)

mit $n \geq 1$, bevorzugt $5 \leq n \leq 80$, besonders bevorzugt $7 \leq n \leq 70$, ganz besonders bevorzugt $8 \leq n \leq 60$.

In einer bevorzugten Ausführungsform des erfindungsgemäßen Verfahrens weist die Verbindung (1) eine Struktur gemäß Formel (VI) mit $5 \leq n \leq 80$, bevorzugt $7 \leq n \leq 70$ und besonders bevorzugt $8 \leq n \leq 60$ auf, wobei diese Verbindung (VI) auch als Tri-sec.-butylphenolethoxylat mit 5 bis 80, bevorzugt 7 bis 70 und besonders bevorzugt mit 8 bis 60 Ethoxy-Einheiten bezeichnet wird.

Verbindung (2)

In einer Ausführungsform des erfindungsgemäßen Verfahrens enthält die komplexbildende Komponente neben der Verbindung (1) auch eine oder mehrere Verbindungen (2), wobei die Verbindung (2) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Ester oder Amide, Cyclodextrine oder Phosphorverbindungen ausgewählt werden kann.

Bei dem erfindungsgemäßen Verfahren zur Herstellung der DMC-Katalysatoren werden als Verbindung (2) bevorzugt Polyether eingesetzt.

In einer bevorzugten Ausführungsform weist der Polyether ein zahlenmittleres Molekulargewicht von ≥ 500 g/mol auf, wobei das zahlenmittlere Molekulargewicht aus der ermittelten OH-Zahl berechnet wird.

Die Bestimmung der OH-Zahlen erfolgt gemäß der Vorschrift der DIN 53240.

Geeignete Polyether beinhalten solche, die mittels Ringöffnungspolymerisation von cyclischen Ethern hergestellt werden, wobei diese cyclischen Ether beispielsweise auch Oxetan-Polymere und auch Tetrahydrofuran-Polymere umfassen. Jegliche Katalyse ist hierfür möglich. Der Polyether weist hierbei geeignete Endgruppe auf, wie beispielsweise Hydroxyl-, Amin, Ester oder Ether-Endgruppen.

In einer besonders bevorzugten Ausführungsform weist der Polyether eine durchschnittliche Hydroxylfunktionalität von 2 bis 8 und ein zahlenmittleres Molekulargewicht im Bereich von 500 g/mol bis 10.000 g/mol, bevorzugt von 700 g/mol bis 5.000 g/mol auf, wobei das zahlenmittlere Molekulargewicht aus der ermittelten OH-Zahl berechnet wird.

**In** einer besonders bevorzugten Ausführungsform sind die Polyether Polyetherpolyole, wobei die Polyetherpolyole durch Umsetzung von Alkylenoxiden und H-funktionellen Starterverbindungen in Gegenwart von sauren, basischen und/oder metallorganischen Katalysatoren erhalten werden. Diese metallorganischen Katalysatoren sind beispielsweise Doppelmetallcyanid (DMC) - Katalysatoren.

Geeignete Polyetherpolyole sind Poly(oxypropylen)polyole, Poly(oxypropylenoxyethylen)polyole, Polytetramethylenetherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken.

**In** einer bevorzugten Ausführungsform ist das Polyetherpolyol ein Poly(oxypropylen)polyol mit einem zahlenmittleren Molekulargewicht von ≥ 500 g/mol, wobei das zahlenmittlere Molekulargewicht aus der ermittelten OH-Zahl berechnet wird.

In einer besonders bevorzugten Ausführungsform ist das Polyetherpolyol ein Poly(oxypropylen)polyol, bevorzugt ein Poly(oxypropylen)diol und/oder ein Poly(oxypropylen)triol mit einem zahlenmittleren Molekulargewicht von 700 g/mol bis 4000 g/mol, wobei das zahlenmittlere Molekulargewicht aus der ermittelten OH-Zahl berechnet wird.

In einer alternativen Ausführungsform haben die Polyether eine durchschnittliche Hydroxylfunktionalität von 2 bis 8 und ein zahlenmittleres Molekulargewicht im Bereich von 150 g/mol bis kleiner 500 g/mol, bevorzugt von 200 g/mol bis 400 g/mol, wobei das zahlenmittlere Molekulargewicht aus der ermittelten OH-Zahl berechnet wird.

In einer bevorzugten alternativen Ausführungsform sind die alternativen Polyether Polyetherpolyole, wobei diese alternativen Polyetherpolyole eine durchschnittliche Hydroxylfunktionalität von 2 bis 8 und ein zahlenmittleres Molekulargewicht im Bereich von 150 g/mol bis kleiner 500 g/mol, bevorzugt eine durchschnittliche Hydroxylfunktionalität von 2 bis 8 und ein zahlenmittleres Molekulargewicht im Bereich von 200 g/mol bis 400 g/mol aufweisen wobei das zahlenmittlere Molekulargewicht aus der ermittelten OH-Zahl berechnet wird. Diese alternativen Polyetherpolyole werden ebenfalls durch Umsetzung von Alkylenoxiden und H-funktionellen Starterverbindungen in Gegenwart von sauren, basischen und/oder metallorganischen Katalysatoren erhalten. Diese metallorganischen Katalysatoren sind beispielsweise Doppelmetallcyanid (DMC) - Katalysatoren.

Geeignete alternative Polyetherpolyole sind Poly(oxypropylen)polyole, Poly(oxypropylenoxyethylen)polyole, Polytetramethylenetherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy) ethylen Blöcken. Weiterhin sind auch Tripropylenglykol, Triethylenglykol, Tetrapropylenglykol, Tetraethylenglykol, Dipropylenglykolmonomethylether, Tripropylenglykolmonomethylether, sowie Monoalkyl- und Dialkylether von Glykolen und Poly(alkylenglykol)en geeignet.

In einer besonders bevorzugten alternativen Ausführungsform ist das alternative Polyetherpolyol ein Polypropylenglykol und/oder ein Polyethylenglykol mit einem zahlenmittleren Molekulargewicht im Bereich von 150 g/mol bis kleiner 500 g/mol, wobei das zahlenmittlere Molekulargewicht aus der ermittelten OH-Zahl berechnet wird.

In einer bevorzugten Ausführungsform des erfindungsgemäßen Verfahrens beträgt das Stoffmengenverhältnis der Verbindung (1) zur Verbindung (2) von 50 zu 1 bis 1 zu 50, bevorzugt 20 zu 1 bis 1 zu 20.

In einer alternativen Ausführungsform des erfindungsgemäßen Verfahrens enthält die komplexbildende Komponente neben der Verbindung (1) keine zusätzliche Verbindung (2).

*Cyanidfreies Metallsalz*

Zur Herstellung der Doppelmetallcyanid-Verbindungen geeignete cyanidfreie Metallsalze besitzen bevorzugt die allgemeine Formel (IX),

$$M(X)_n \qquad (IX)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,
oder geeignete cyanidfreie Metallsalze besitzen die allgemeine Formel (X),

$$M_r(X)_3 \qquad (X)$$

wobei

M ausgewählt ist aus den Metallkationen $Fe^{3+}$, $Al^{3+}$ und $Cr^{3+}$,
X sind ein oder mehrere (d.h. verschiedene) Anionen, vorzugsweise ein Anion ausgewählt aus der Gruppe der

Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (XI),

$$M(X)_s \qquad (XI)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (XII),

$$M(X)t \qquad (XII)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

In einer bevorzugten Ausführungsform des erfindungsgemäßen Verfahrens ist das cyanidfreie Metallsalz der wässrigen Lösung eines cyanidfreien Metallsalzes eine oder mehrere Verbindung(en) und wird ausgewählt aus der Gruppe bestehend aus Zinkchlorid, Zinkbromid, Zinkjodid, Zinkacetat, Zink-acetylaceto-nat, Zinkbenzoat, Zinknitrat, Eisen(II)sulfat, Eisen(II)¬bromid, Eisen¬(II)¬chlorid, Cobalt(II)chlorid, Cobalt(II)thio-cyanat, Nickel(II)chlorid und Nickel¬(II)nitrat besonders bevorzugt Zinkchlorid.

*Metallcyanidsalz*

Zur Herstellung der Doppelmetallcyanid-Verbindungen geeignete Metallcyanidsalze besitzen bevorzugt die allgemeine Formel (XIII)

$$(Y)_a\, M'(CN)_b\, (A)_c \qquad (XIII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),
A ausgewählt ist aus einem oder mehreren Anionen der Gruppe bestehend aus Halogeniden (d.h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

In einer bevorzugten Ausführungsform des erfindungsgemäßen Verfahrens ist das Metallcyanidsalz der wässrigen Lösung eines Metallcyanidsalzes eine oder mehrere Verbindung(en) und wird ausgewählt aus der Gruppe bestehend aus Kaliumhexacyanocobaltat(III), Kaliumhexacyanoferrat(II), Kaliumhexacyanoferrat(III), Calciumhexacyanocobaltat(III) und Lithiumhexacyanocobaltat(III) besonders bevorzugt Kaliumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (XIV)

$$M_X[M'_{X'}(CN)_y]_z \qquad (XIV),$$

worin M wie in Formel (IX) bis (XII) und
M' wie in Formel (XIII) definiert ist, und
x, x', y und z sind ganzzahlig und so gewählt, dass die Elektronenneutralität der Doppelmetallcyanidverbindung gegeben ist.

Vorzugsweise gilt x = 3, x' = 1, y = 6 und z = 2, M ist Zn(II), Fe(II), Co(II) oder Ni(II) und M' ist Co(III), Fe(III), Cr(III) oder Ir(III).

In einer bevorzugten Ausführungsform des erfindungsgemäßen Verfahrens ist die Doppelmetallcyanid-Verbindung eine oder mehrere Verbindung(en) und wird ausgewählt aus der Gruppe bestehend aus Zinkhexacyano¬cobaltat(III), Zink¬hexacyanoiridat(III), Zinkhexacyanoferrat(III) und Cobalt(II)hexa¬cyanocobaltat(III). Besonders bevorzugt verwendet wird Zinkhexacyanocobaltat(III).

*Organischer Komplexligand*

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093, WO 99/46042 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

In einer bevorzugten Ausführungsform des erfindungsgemäßen Verfahrens ist der organische Komplexligand eine oder mehrere Verbindung(en) und wird ausgewählt aus der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol, besonders bevorzugt tert.-Butanol.

*Mischdüse*

Die Herstellung der DMC-Katalysatordispersion erfolgt bevorzugt unter Einsatz einer Mischdüse (z.B. einer Glattstrahldüse, Levosdüse, Boschdüse und ähnlichem), besonders bevorzugt eines Strahldispergators, wie dies in der Patent-anmel¬dung WO 01/39883 A1 beschrieben ist.

Der prinzipielle Aufbau und die Wirkungsweise geeigneter Mischdüsen soll im folgenden beschrieben werden. Fig. 1 zeigt den schematischen Aufbau einer einfachen Glattstrahldüse. Der Eduktstrom 1 wird zunächst in der Düse 3 beschleunigt und mit hoher Strömungsgeschwindigkeit in den langsam fließenden Eduktstrom 2 verdüst. Dabei wird Eduktstrom 2 beschleunigt und Eduktstrom 1 abgebremst. Ein Teil der kinetischen Energie von Eduktstrahl 1 wird bei diesem Vorgang in Wärme umgewandelt und steht somit für den Vermischungsvorgang nicht mehr zur Verfügung. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können. Die mittlere Leistungsdichte P berechnet sich dabei nach der folgenden Formel:

$$P = \frac{\Delta p \cdot \dot{V}}{V}$$

mit:

- $\Delta p$: Druckverlust in der Düse
- V: Volumenstrom
- V: Volumen der Düsenbohrung

Der Einsatz solcher Düsen soll im Folgenden als Methode 1 bezeichnet werden.

In einer Glattstrahldüse wird ein erster Eduktstrom zunächst in einer Düse beschleu-nigt und mit hoher Strömungsgeschwindigkeit in einen langsam fließenden zweiten Eduktstrom verdüst. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können.

*Strahldispergator*

Besonders bevorzugt wird für das erfindungsgemäße Verfahren ein Strahldispergator wie er in Fig. 2 oder Fig. 3 dargestellt ist, eingesetzt. Der Strahldispergator kann so aufgebaut sein (Fig. 2), dass zwei Düsen 5 und 6 hintereinander angeordnet sind. Der Eduktstrom 1 wird in der Düse 5 durch die Querschnittsverengung zunächst stark beschleunigt. Der beschleunigte Strahl saugt dabei aufgrund der hohen Strö-mungsgeschwindigkeit die zweite Komponente an. Der Abstand der Düsen wird be¬vorzugt so gewählt werden, dass in der Mischkammer 4 aufgrund der kurzen Ver-weilzeit nur Keimbildung jedoch kein Kristallwachstum erfolgt. Maßgeblich für die optimale Auslegung des Strahldispergators ist somit die Keimbildungs-geschwindig-keit des Feststoffs. Günstigerweise wird eine Verweilzeit von 0,0001 s bis 0,15 s, vorzugsweise 0,001 s bis 0,1 s eingestellt. Das Kristallwachstum erfolgt erst im Ablauf 3. Der Durchmesser der Düsen 6 sollte bevorzugt so gewählt werden, dass dort eine weitere Beschleunigung der teilweise gemischten Edukteströme erfolgt. Auf-grund der dadurch in den Düsen 6 zusätzlich auftretenden Scherkräfte wird im Ver-gleich zur Methode 1 der Zustand der homogenen Vermischung durch einen schnel-leren Wirbelzerfall in kürzerer Zeit erreicht. Dadurch ist es im Gegensatz zu Methode 1 selbst bei Fällungsreaktionen mit sehr hoher Keimbildungs¬geschwindigkeit mög-lich, den Zustand einer idealen Vermischung der Edukte zu erreichen, so dass die Ein¬stellung von definierten stöchiometrischen Zusammen-setzungen während der Fällungsreaktion möglich ist. Als günstig haben sich Düsendurchmesser von 5000 $\mu$m bis 50 $\mu$m, vorzugsweise 2000 $\mu$m bis 200 $\mu$m erwiesen bei Druckverlusten in der Düse von 0,1 bar bis 1000 bar oder Leistungsdichten im Bereich von $1*10^7$ W/m$^3$ bis $1*10^{13}$ W/m$^3$. Dieser Vermischungs¬¬vorgang soll im folgenden mit Methode 2 bezeichnet werden.

Je nach gewünschter Partikelgröße können noch n Düsen (mit n = 1 - 5) nach-ge-schaltet werden, so dass man einen mehrstufigen Strahldispergator erhält. In Fig. 3 ist ein solcher mehrstufiger Strahldispergator gezeigt. Im Anschluss an die Düse 6 wird die Dispersion noch einmal durch die Düse 7 geführt. Für die Auslegung der Düsendurchmesser gilt das gleiche wie für Düse 6.

Der zusätzliche Vorteil weiterer Dispergatoren gegenüber der Methode 2 besteht darin, dass durch die großen Scherkräfte in den Düsen bereits gebildete Partikel mechanisch zerkleinert werden können. Auf diese Weise ist es möglich, Partikel mit Durchmessern von 10 $\mu$m bis 0,1 $\mu$m herzustellen. Anstelle mehrerer hintereinander geschalteter Düsen kann die Zerkleinerung aber auch durch Kreislaufführung der Dispersion erreicht werden. Der Einsatz solcher Düsen wird im Folgenden mit Methode 3 gekennzeichnet.

Durch die Energiedissipation in den Düsen und durch die Kristallisationsenthalpie kann es zu einer Erwärmung der Dispersion kommen. Da die Temperatur einen wesent¬lichen Einfluss auf den Kristallbildungsprozess haben kann, kann für die isotherme Prozessführung hinter dem Mischorgan ein Wärmeübertrager eingebaut werden.

Ein problemloses Scale-up ist beispielsweise möglich durch den Einsatz einer größeren Zahl von Bohrungen, die Parallelschaltung mehrerer Mischorgane oder die Ver¬größerung der freien Düsenfläche. Letzteres wird jedoch nicht durch eine Er-höhung des Düsendurchmessers erreicht, da auf diese Weise die Möglichkeit des Auftretens eines Kernstroms besteht, wodurch eine Verschlechterung des Misch-ergebnisses resultiert. Bei Düsen mit großen freien Düsenflächen sind deswegen be¬vorzugt Schlitze mit entsprechender Fläche einzusetzen.

Die Herstellung der DMC-Katalysatordispersion erfolgt bevorzugt unter Ein-satz einer Mischdüse, besonders bevorzugt eines Strahldispergators. Beispiele geeigneter Appa-raturen sind in Fig. 4 und 5 gezeigt. Fig. 4 zeigt ein Semi-batch-Verfahren unter Ein-satz eines Schlaufenreaktors, Fig.5 ein kontinuierliches Verfahren zur Herstellung der DMC-Katalysatordispersion.

In einer Ausführungsform des erfindungsgemäßen Verfahrens umfasst die Herstellung des Doppelmetallcyanid-Katalysators (DMC)

i) in einem ersten Schritt die Umsetzung der wässrigen Lösung des cyanidfreien Metallsalzes, der wässrigen Lösung des Metallcyanidsalzes, des organischen Komplexliganden sowie der komplexbildenden Komponente, welche eine oder mehrere Verbindung(en) (1) der Formel (I) enthält (gemäß Anspruch 1), unter Bildung einer Dispersion;
(ii) optional in einem zweiten Schritt die Abtrennung des Feststoffs aus der aus (i) erhaltenen Dispersion;
(iii) optional in einem dritten Schritt die Waschung des isolierten Feststoff mit einer wässrigen Lösung eines organischen Komplexliganden mittels einer Filterkuchenwäsche;
(iv) und optional in einem vierten Schritt die Trocknung des erhaltenen Feststoffs.

*Schritt i)*

Bevorzugt werden dabei zunächst die wässrigen Lösungen des cyanidfreien Metallsalzes, z.B. Zinkchlorid, eingesetzt im stöchiometrischen Überschuss (mindestens 50 Mol-% bezo¬gen auf das Metallcya¬nidsalz), und des Metallcyanidsalzes, z.B. Kaliumhexa-cyano-cobaltat, in Gegenwart des organi¬schen Komplexliganden, der z.B. tert.-Buta¬nol sein kann, umge¬setzt, wobei sich eine Dispersion bildet. Bevorzugt erfolgt die Herstellung dieser DMC-Katalysatordispersion unter Einsatz einer Misch¬düse, besonders bevorzugt eines Strahldispergators.

Die Herstellung der DMC-Katalysatordispersion im Semi-batch Verfahren unter Verwendung eines Strahl¬dispergators in Kombination mit einem Schlaufenreaktor (gemäß Fig. 4) wird im Folgenden erläutert. Hierbei kann entweder die wässrige Lösung eines cyanidfreien Metallsalzes aus dem Behälter B2 im Kreis geführt und die wässrige Metallcyanid-Lösung aus Behälter B1 zudosiert werden, oder umgekehrt. Bei der Vereinigung beider Ströme im Mischorgan M kommt es zur Bildung einer Dispersion der DMC-Verbindung. Die Herstellung der Dispersion der DMC-Verbindung kann nach Methode 1, 2 oder 3 erfolgen, bevorzugt nach Methode 2 oder 3. Der Vorteil dieser Methoden besteht in der Möglichkeit, während des gesamten Fällungsvorgangs ein konstantes Eduktverhältnis zu realisieren.

Bevorzugt wird die gebildete Dispersion nach der Fällung noch einige Minuten bis mehrere Stunden im Kreislauf durch den Strahldispergator geführt.

Die Düsendurchmesser liegen dabei bevorzugt zwischen 2000 μm bis 200 μm bei Druckverlusten in der Düse zwischen 0,1 bar bis 1000 bar.

Der organische Komplexligand kann dabei in der wässrigen Lösung des cyanidfreien Metallsalzes und/ oder des Metallcyanidsalzes vorhanden sein, oder er wird der nach Ausfällung der Doppelmetallcyanid-Verbindung erhaltenen Dispersion unmittelbar zudosiert (über Behälter B1 oder B2).

In einer Ausführungsform des erfindungsgemäßen Verfahrens wird der im Kreislauf durch den Strahldispergator zirkulierenden Dispersion anschließend noch eine komplexbildende Komponente, welche eine oder mehrere Verbindung(en) (1) der Formel (I) enthält, über Behälter B1 oder B2 zudosiert. Die komplexbildende Kom-ponente, welche eine oder mehrere Verbindung(en) (1) der Formel (I) enthält, wird dabei bevorzugt in einer Mischung aus Wasser und organischem Komplexliganden eingesetzt.

Die Dosierung der komplexbildenden Komponente, welche eine oder mehrere Verbindung(en) (1) der Formel (I) enthält, in den Kreislauf und ein anschließendes Rezirkulieren findet bevorzugt unter Druck¬verlus-ten in der Düse zwischen 0,001 bar und 10 bar statt.

Erfindungsgemäß kann die DMC-Katalysatordispersion auch in einem konti¬nuier-lichen Verfahren, wie es beispielhaft in Fig. 5 gezeigt ist, hergestellt werden. Die wässrigen Lösungen des cyanidfreien Metallsalzes und des Metallcyanidsalzes werden nach Methode 1, 2 oder 3 im Mischorgan M1 umge¬setzt, wobei sich eine Dispersion bil¬det. Der organische Komplexligand kann dabei in der wäßrigen Lösun¬g des cyanidfreien Metall-salzes und/ oder des Metallcyanidsalzes vorhanden sein. In diesem Fall entfällt in Fig. 5 die Mischstufe M2. Möglich ist auch die Zugabe des organischen Komplexliganden nach der Aus¬fällung der Doppelme¬tallcyanid-Verbindung über das Mischorgan M2. Zur Erhöhung der Verweilzeit der Dispersion kann diese über das Mischorgan M2 im Kreislauf gefahren werden. Im Anschluss kann im Mischorgan M3 die komplexbildende Komponente, welche eine oder mehrere Verbindung(en) (1) der Formel (I) enthält, - bevorzugt in einer Mischung aus Wasser und organischem Komplexliganden - zugegeben und zur Er-höhung der Verweilzeit rezirkuliert werden.

*Prozesstemperatur*

In einer bevorzugten Ausführungsform des erfindungsgemäßen Verfahrens wird in Schritt i) eine Prozesstemperatur zwischen 26°C und 49°C, bevorzugt zwischen 28 °C und 47 °C, besonders bevorzugt zwischen 29 °C und 42 °C und ganz besonders bevorzugt zwischen 30 °C und 40 °C verwendet. Hierbei entspricht die Prozesstemperatur der Prozesstemperatur im Behälter B2 in Fig. 4. Eine Prozesstemperatur zwischen 26°C und 49°C, bevorzugt zwischen 28 °C und 47 °C, besonders bevorzugt zwischen 29 °C und 42 °C und ganz besonders bevorzugt zwischen 30 °C und 40 °C führt zu einer weiteren Verbesserung der Aktivität des DMC-Katalysators.

*Schritt (ii)*

In einer bevorzugten Ausführungsform des erfindungsgemäßen Verfahrens wird in einem zweiten Schritt (ii) der Feststoffs aus der aus (i) erhaltenen Dispersion abgetrennt.

Hierbei erfolgt die Isolierung des Feststoffs (d.h. die Vorstufe des erfindungsgemäßen Katalysators) aus der Dispersion durch bekannte Techniken, wie Zentrifugation oder Filtration.

Geeignete Filter¬vorrich¬tungen sind beispielsweise beschrieben in "Ullmann's Encyclopedia of Industrial Chemistry", Vol. B 2, Kapitel 9. und 10., VCH, Weinheim, 1988 und H. Gasper, D. Oechsle, E. Pongratz (Hrsg.): "Handbuch der industriellen Fest/Flüssig-Filtration",Wiley-VCH Verlag GmbH, Weinheim, 2000.

Das zur Filtration notwendige Druckgefälle kann dabei durch Schwerkraft, durch Zentrifugalkraft (z.B. Filterzentrifugen), bevorzugt durch Gasdifferenzdruck (z.B. Vakuumfilter oder Druckfilter) oder durch Flüssigkeitsdruck (z.B. Filterpressen, Trommel- oder Scheibenfilter sowie eventuell Querstromfiltrationsmodule) aufge-bracht werden.

Für die Abtrennung der Katalysatoren können sowohl diskontinuierlich als auch kontinuierlich betriebene Filtervorrichtungen eingesetzt werden. Beispiele für diskontinuierlich arbeitende Filtervorrichtungen sind Schäl- und Stülpfilterzentrifugen, Membran-, Kammer-, Rahmen- oder Röhrenfilterpressen, Pressfilterautomaten, Auto--press-Vorrichtungen, Tellerdruck-, Kerzen- und Plattenfilter sowie Vakuum- und Drucknutschen. Beispiele für kontinuierlich arbeitende Filtervorrichtungen sind Sieb-bandpressen, Druck- und Vakuumtrommelfilter, Druck- und Vakuumscheiben-filter, Bandfilter und Querstromfilter.

Besonders geeignet zur Filtration der DMC-Katalysatordispersion im Labormaßstab sind Vakuum- oder Druckfilter oder -nutschen, im Technikums- und Betriebsmaß-stab Drucknutschen, Filterpressen und Pressfilterautomaten.

Als besonders geeignet haben sich im Pilot- und Technikumsmaßstab Membran-filter-pressen erwiesen. Diese ermöglichen unter Zuhilfenahme eines geeigneten Filter-tuches, bevorzugt eines Membrantuches, die Filtration der DMC-Katalysator-dispersion aufgrund eines aufgebrachten Flüssigkeitsdruckgefälles.

Die Filtration wird i.a. bei Temperaturen von 10 bis 80°C durchgeführt. Die angelegten Druckdifferenzen können 0,001 bar bis 200 bar, bevorzugt 0,1 bar bis 100 bar, besonders bevorzugt 0,1 bar bis 25 bar betragen, wobei die angelegte Druckdifferenz von der eingesetzten Vorrichtung abhängig ist.

*Schritt (iii)*

Der in Schritt (ii) erhaltene isolierte Feststoff kann mittels Redispergieren oder Filterkuchenwäsche gewaschen werden.

In einer bevorzugten Ausführungsform des erfindungsgemäßen Verfahrens wird in einem dritten Schritt (iii) der isolierte Feststoff mit einer wässrigen Lösung eines organischen Komplexliganden mittels einer Filterkuchenwäsche gewaschen.

Hierbei erfolgt die Filterkuchenwäsche bevorzugt durch Anmaischen oder bevorzugt durch eine Durchströmungswäsche. Dabei wird der Kuchen mit der Waschflüssigkeit durchströmt, und die vorher im Kuchen enthaltene Flüssigkeit wird verdrängt, wobei auch Diffusionseffekte wirksam werden. Die Entfeuchtung des gewaschenen Kuchens kann durch Gasdifferenzdruck, Fliehkraft oder mechanisches Pressen erfolgen oder bevorzugt kombiniert durch eine Gasdifferenz-druck¬ent¬feuchtung mit nachfolgendem mechanischen Auspressen. Der Druck zum mecha¬nischen Auspresssen kann dabei sowohl mechanisch als auch durch Membranen aufgebracht werden.

Mit Hilfe der Filterkuchenwäsche wird der Herstellungsprozess vereinfacht und damit auch beschleunigt. Das bevorzugte Verhältnis von Waschflüssigkeit zu Filterkuchen-volumen liegt bei den Mengen, die einen vollständigen Austausch der im ursprünglichen Filterkuchen vorhandenen Flüssigkeitsmenge bewirken.

In einer alternativ bevorzugten Ausführungsvariante des erfindungsgemäßen Verfahrens wird der isolierte Feststoff anschließend in einem dritten Verfahrensschritt mit einer wässrigen Lösung des organischen Komplexliganden gewaschen (z.B. durch Redispergieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung komplexbildende Komponente, welche eine oder mehrere Verbindung(en) (1) der Formel (I) enthält, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (z.B. durch Redispergieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt

einmal oder mehrmals, vorzugsweise einmal bis dreimal wiederholt, oder vorzugsweise wird eine nicht wässrige Lösung, wie z.B. eine Mischung oder Lösung aus organischem Komplexliganden und komplexbildender Komponente, welche eine oder mehrere Verbindung(en) (1) der Formel (I) enthält, (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

*Schritt (iv)*

In einer bevorzugten Ausführungsform des erfindungsgemäßen Verfahrens wird in einem vierten Schritt (iv) der erhaltene Feststoff anschließend getrocknet.

Hierbei wird der isolierte und gegebenenfalls gewaschene Feststoff anschließend, gegebenenfalls nach Pulverisierung, bei Temperaturen von im allgemeinen 20 - 100°C und bei Drücken von im allgemeinen 0,1 mbar bis *Normaldruck* (1013 mbar) getrocknet.

*Schritte (ii) und (iii)*

In einer bevorzugten Ausführungsform des erfindungsgemäßen Verfahrens erfolgen die Schritte (ii) und (iii) in einer Filterpresse.

Es hat sich als vorteilhaft erwiesen, den gewaschenen Filterkuchen nach der Filter-kuchen-wäsche bei Drücken von 0,5 bis 200 bar, bevorzugt bei möglichst hohen Drücken, auszupressen. Dies kann z.B. direkt im Anschluss an die Filter¬kuchen-wäsche in einer Filterpresse erfolgen oder mittels anderer geeigneter Press¬vor-richtungen, die ein Aufbringen eines mecha¬ni¬schen Druckes ermöglichen, so dass die im Filterkuchen vorhan¬dene Flüssigkeit durch eine Membran oder ein geeignetes Filtertuch entweichen kann. Das sich an das Waschen des Filterkuchens anschließende bevorzugt vor dem Trocknen durchzuführende mechanische Entfeuchten des Filterkuchens kann bevorzugt in der Filterpresse geschehen, bevorzugt durch mechanisches Auspressen durch einen auf die Membranen aufgegebenen Druck. Das mechanische Entfeuchten führt bevorzugt zu einer möglichst weitgehenden Entfernung der Waschflüssigkeit aus dem Filter-kuchen.

*Schritte (ii), (iii) und (iv)*

Der DMC-Katalysator wird anschließend bei Temperaturen von etwa 20 bis 100°C und bei Drücken von etwa 0,1 mbar bis Normaldruck (1013 mbar) getrocknet. Hierzu sind Kontakttrockner und Konvektionstrockner wie auch Sprühtrockner geeignet. Die Trocknung wird bevorzugt auch direkt in den Vorrichtungen zur mechanischen Flüssigkeitsabtrennung durchgeführt, wenn diese dafür geeignet sind (z.B. Nutschtrockner, Zentrifugentrockner, "heiße Filterpresse").

In einer besonders bevorzugten Ausführungsform des erfindungsgemäßen Verfahrens erfolgen die Schritte (ii), (iii) und (iv) in einer beheizbaren Filterpresse.

Im Verfahren bevorzugt eingesetzt wird die beheizbare Filterpresse. Diese ist aufgebaut wie eine übliche Filterpresse mit Membranpaket. Konstruktiv unterscheiden sich die zu verwendenden Membranplatten von üblichen Membranplatten dadurch, dass ein Heizmedium den Raum hinter der Membran durchströmen kann. Bevorzugt werden flüssigkeitsdichte (sogenannte "tropf-" oder "gasdichte") Membranfilterplatten eingesetzt.

Das aufgeheizte Heizmedium strömt auf der Rückseite der Pressmembranen, vom Filterkuchen durch die Pressmembran und das Filtermedium vollständig getrennt, an den Filterkuchen vorbei und erwärmt diese dabei. Das Pressmedium steht dabei unter einem ausreichend hohen Druck, um den Kontakt der Membranen mit den Filterkuchen zu gewährleisten. Die Filterkuchen können ein- oder beidseitig beheizt werden. Günstig hinsichtlich der Trocknungsdauer ist die beidseitige Beheizung.

Zur Unterstützung des Trocknungsvorgangs liegt filtratseitig Vakuum an. Dieses Vakuum kann beispielsweise durch eine Flüssigkeitsringpumpe erzeugt werden. Der abgesaugte Brüdenstrom wird vor der Vakuumpumpe gekühlt, um die flüchtigen Bestandteile (z.B. tert.-Butanol und Wasser) auszukondensieren. Mess- und Regelgrößen sind die auskondensierte Menge, der Druck im Filtratsystem der Presse und die Filterkuchentemperatur.

Im beschriebenen Verfahren betragen die Membranpressdrücke bevorzugt 0,1 bar bis 10 bar. Temperaturen des Press- und Heizmediums betragen 30°C bis 80°C bevorzugt 40°C bis 60°C. Der filtratseitige Druck ist bevorzugt kleiner als 100 mbar Die Durchflussrate des Heizmediums ist dabei so hoch zu wählen, dass ein guter Wärmeübergang zwischen Heizmedium und Produkt erfolgt. Trocknungszeiten betragen i.A. einige Minuten bis mehrere Stunden, üblicherweise eine bis zehn Stunden. Restfeuchten unterhalb des Zielwertes von ca. 5% werden mit dieser Art der Trocknung sicher erreicht.

In weiteren Verfahrensschritten kann das so isolierte und von Nebenkomponenten befreite Produkt gemahlen und verpackt werden.

*Product-by-process Anspruch*

Ein weiterer Gegenstand der vorliegenden Erfindung ist der nach dem erfindungsgemäßen Verfahren hergestellte DMC-Katalysator.

Ein weiterer Gegenstand der vorliegenden Erfindung ist die Verwendung der nach dem erfindungsgemäßen Verfahren hergestellten DMC-Katalysatoren in einem Verfahren zur Herstellung von Polyoxyalkylenpolyolen, bevorzugt Polyetherpolyolen durch Polyaddition von Alkylenoxiden an aktive Wasserstoffatome aufweisende Starterverbindungen und/oder Polyethercarbonatpolyolen durch Polyaddition von Alkylenoxiden an aktive Wasserstoffatome aufweisende Starterverbindungen in Gegenwart von Kohlendioxid.

Die nach dem erfindungsgemäßen Verfahren hergestellten DMC-Katalysatoren können wegen ihrer außerordentlich hohen Akti¬vität häufig in sehr niedrigen Kon-zen¬trationen eingesetzt werden (25 ppm und weniger, bezogen auf die Menge des her¬zustellenden Polyoxyalkylenpolyols, bevorzugt des Polyetherpo¬lyols). Werden die in Gegen¬-wart der nach dem erfin-dungs-gemäßen Verfahren hergestellten DMC-Katalysatoren hergestellten Polyoxyalkylenpolyole, bevorzugt Poly-etherpolyole, zur Her¬stellung von Polyurethanen verwendet, kann auf eine Ent¬fernung des Kata¬lysators aus dem Polyoxyalkylenpolyol, bevorzugt Polyether-polyol, verzichtet werden, ohne dass die Pro¬dukt¬-quali-täten des er¬halte¬nen Polyurethans nachteilig beeinflusst werden.

## Beispiele

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

### Herstellung der DMC-Katalysatoren:

Beispiel 1 (Vergleich):

Der Katalysator wurde mit einer Apparatur gemäß Fig. 4 aus WO 01/39883 A1 hergestellt.

In einem Schlaufenreaktor, der einen Strahldispergator gemäß Fig. 2 aus WO 01/39883 A1 mit einer Bohrung (Durchmesser 0,7 mm) enthält, wurde eine Lösung aus 258 g Zinkchlorid in 937 g destilliertem Wasser und 135 g tert.-Butanol bei 35°C zirkuliert (bestimmt im Behälter D2 in Fig. 4 WO 01/39883 A1). Hierzu wurde eine Lösung aus 26 g Kaliumhexa¬cyano¬cobaltat in 332 g destilliertem Wasser zudosiert. Der Druckverlust im Strahldispergator betrug dabei 2,9 bar. Anschließend wurde die gebildete Dispersion 60 min bei 35°C und einem Druckverlust im Strahldispergator von 2,9 bar zirkuliert. Danach wurde eine Mischung aus 5,7 g tert.-Butanol, 159 g destilliertem Wasser und 27,6 g Polypropylenglykol 1000 (PPG-1000) zudosiert und die Dispersion dann 80 min bei 35°C und einem Druckverlust im Strahldispergator von 2,9 bar zirkuliert.

230 g der erhaltenen Dispersion wurden in einer Drucknutsche mit 20 $cm^2$ Filterfläche filtriert und anschließend mit einer Mischung aus 82 g tert.-Butanol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

Beispiel 2:

Beispiel 2 wurde analog zu Beispiel 1 (Vergleich) durchgeführt, mit dem Unterschied, dass in den entsprechenden Herstellungsschritten Tri-sec.-butylphenolethoxylat mit 13 EO (Clariant ® Sapogenat T 130) statt Polypropylenglykol 1000 (PPG-1000) in jeweils identischen Mengen von 27,6 g bzw. 1,7 g verwendet wurde.

Beispiel 3:

Beispiel 3 wurde analog zu Beispiel 1 (Vergleich) durchgeführt, mit dem Unterschied, dass in den entsprechenden Herstellungsschritten Tri-sec.-butylphenolethoxylat mit 18 EO (Clariant ® Sapogenat T 180) statt Polypropylenglykol 1000 (PPG-1000) in jeweils identischen Mengen von 27,6 g bzw. 1,7 g verwendet wurde.

Beispiel 4:

Beispiel 4 wurde analog zu Beispiel 1 (Vergleich) durchgeführt, mit dem Unterschied, dass in den entsprechenden Herstellungsschritten Tri-sec.-butylphenolethoxylat mit 50 EO (Clariant ® Sapogenat T 500) statt Polypropylenglykol 1000 (PPG-1000) in jeweils identischen Mengen von 27,6 g bzw. 1,7 g verwendet wurde.

**Katalysator-Testung ("8K Diol Stressed Test"):**

Die Testung der DMC-Katalysatoren erfolgte im sogenannten "8K Diol Stressed Test". Hierbei wurde ausgehend von einem bifunktionellen Polypropylenglykol-Starter mit OH-Zahl = 147 mg KOH/g ("Arcol Polyol 725" der Firma Covestro) bei kurzer Propylenoxid-Dosierzeit (30 Minuten) ein Polypropylenglykol mit berechneter OH-Zahl = 14 mg KOH/g, d.h. Molekulargewicht = 8.000 g/mol ("8K Diol") hergestellt. Das entscheidende Beurteilungskriterium für die Katalysatorqualität/-aktivität in diesem Test ist die Viskosität des erhaltenen Polyols, wobei ein DMC-Katalysator erhöhter Qualität/Aktivität zu einer niedrigeren 8K Diol Viskosität führt.

Allgemeine Durchführung:

In einem 1 Liter Edelstahlreaktor wurden 75 g eines bifunktionellen Polypropylenglykol-Starters (OH-Zahl = 147 mg KOH/g) und 30,7 mg DMC-Katalysator vorgelegt. Nach 5-maligem Stickstoff/Vakuum-Austausch zwischen 0,1 und 3,0 bar (absolut) wurde der Reaktorinhalt unter Rühren (800 U/min) auf 130°C aufgeheizt. Das Gemisch wurde dann 30 min bei 130°C und 100 mbar (absolut) mit Stickstoff gestrippt. Anschließend wurden bei 130°C und 100 mbar (absolut) 7,5 g Propylenoxid zur Aktivierung des Katalysators zugegeben. Die Katalysatoraktivierung äußerte sich in einem beschleunigten Druckabfall im Reaktor. Nach erfolgter Katalysatoraktivierung wurde das restliche Propylenoxid (685,7 g) innerhalb von 30 min bei 130°C unter Rühren (800 U/min) zudosiert. Nach einer Nachreaktionszeit von 30 min bei 130°C wurden flüchtige Bestandteile im Vakuum (< 10 mbar) bei 90°C für 30 min abdestilliert. Das Produkt wurde dann auf Raumtemperatur abgekühlt und dem Reaktor entnommen. Vom erhaltenen Produkt wurden OH-Zahl und Viskosität (25°C) gemessen. Im Falle eines Abweichens der gemessenen von der berechneten OH-Zahl (14 mg KOH/g) wurde aus der gemessenen Viskosität mit der folgenden Formel eine "korrigierte Viskosität" ermittelt: korrigierte Viskosität (25°C) = gemessene Viskosität (25°C) + 659 * (OH-Zahl - 14)

Die Ergebnisse der Katalysator-Testungen im "8K Diol Stressed Test" sind in Tabelle 1 zusammengefasst.

Tabelle 1:

| Katalysator-Testung / Beispiel | DMC-Katalysator / Beispiel | OH-Zahl [mg KOH/g] | Viskosität 25°C / gemessen [mPas] | Viskosität 25°C / korrigiert [mPas] |
|---|---|---|---|---|
| 5 (Vgl.) | 1 (Vgl.) | 14,0 | 4324 | 4324 |
| 6 | 2 | 14,1 | 3950 | 4016 |
| 7 | 3 | 14,2 | 3695 | 3827 |
| 8 | 4 | 13,9 | 3845 | 3779 |

Die Ergebnisse zeigen, dass DMC-Katalysatoren, die unter Verwendung von Tri-sec.-butylphenolethoxylat als komplexbildender Komponente hergestellt wurden, im "8K Diol Stressed Test", als Semi-batch Polyol-Herstellungsprozess, zu geringeren Viskositätswerten der Polyole ggü. DMC-Katalysatoren unter Verwendung von Polypropylenglykol 1000 als komplexbildender Komponente führen.

**Katalysator-Testung (Kontinuierlicher Prozess):**

In einen kontinuierlich betriebenen Edelstahl-Druckreaktor mit einem zugänglichen Reaktorvolumen $V_R$ von 1,951 Liter gefüllt mit einem Polyetherpolyol (OH-Funktionalität = 2,82; OH-Zahl = 48 mg KOH/g; Verhältnis Propylenoxid/Ethylenoxid = 89,5/10,5; enthaltend 25 ppm DMC-Katalysator) wurden bei einer Temperatur von 130°C unter Rühren (800 U/min) folgende Komponenten mit den angegebenen Massenströmen dosiert:

- Propylenoxid mit 817,50 g/h
- Ethylenoxid mit 95,51 g/h
- Glycerin mit 21,69 g/h
- Dispersion von 0,00613 g DMC-Katalysator in 1 g Propylenglykol mit 3,83 g/h

Die Reaktionsmischung wurde kontinuierlich aus dem Druckreaktor entnommen, wobei der Reaktor stets vollständig mit Flüssigkeit gefüllt war, so dass das Reaktionsvolumen V dem Reaktorvolumen $V_R$ entsprach. Zur

Vervollständigung der Reaktion wurde das entnommene Reaktionsgemisch kontinuierlich in einen auf 100°C temperierten Nachreaktor (Rohrreaktor mit einem Innenvolumen von 1,0 L) überführt. Nach Verlassen des Nachreaktors wurde das erhaltene Produkt auf Raumtemperatur abgekühlt und anschließend analytisch untersucht. In Tabelle 2 sind die analytischen Werte einer Probe angegeben, die nach einer Gesamtreaktionszeit gezogen wurde, die 12 Verweilzeiten entspricht.

Es wurden OH-Zahl und Viskosität (25°C) gemessen. Im Falle eines Abweichens der gemessenen von der berechneten OH-Zahl (48 mg KOH/g) wurde aus der gemessenen Viskosität mit der folgenden Formel eine "korrigierte Viskosität" ermittelt:

korrigierte Viskosität (25°C) = gemessene Viskosität (25°C) + 13 * (OHZ - 48)

Tabelle 2:

| Katalysator-Testung / Beispiel | DMC-Katalysator / Beispiel | OH-Zahl [mg KOH/g] | Viskosität 25°C / gemessen [mPas] | Viskosität 25°C / korrigiert [mPas] |
|---|---|---|---|---|
| 9 (Vgl.) | 1 (Vgl.) | 47,4 | 731 | 723 |
| 10 | 3 | 47,6 | 708 | 703 |
| 11 | 4 | 47,6 | 703 | 698 |

Die Ergebnisse zeigen, dass DMC-Katalysatoren, die unter Verwendung von Tri-sec.-butylphenolethoxylat als komplexbildender Komponente hergestellt wurden, auch im kontinuierlichen Polyol-Herstellungsprozess zu geringeren Viskositätswerten der Polyole ggü. DMC-Katalysatoren unter Verwendung von Polypropylenglykol 1000 als komplexbildender Komponente führen.

## Patentansprüche

**1.** Verfahren zur Herstellung eines Doppelmetallcyanid-Katalysators (DMC) umfassend

i) Umsetzung einer wässrigen Lösung eines cyanidfreien Metallsalzes, einer wässrigen Lösung eines Metallcyanidsalzes, eines organischen Komplexliganden sowie einer komplexbildenden Komponente, **dadurch gekennzeichnet, dass** die komplexbildende Komponente eine oder mehrere Verbindungen (1) der Formel (I) enthält:

$$R_1\text{-O-}(R_2\text{-O})_n\text{-H} \qquad (I)$$

mit

$R_1$ einer substituierten oder unsubstituierten Arylgruppe,
$R_2$ einer Alkylengruppe, bevorzugt einer Ethylengruppe oder Isopropylengruppe, besonders bevorzugt Ethylengruppe (Et), und
$n \geq 1$, bevorzugt $5 \leq n \leq 80$, besonders bevorzugt $7 \leq n \leq 70$, ganz besonders bevorzugt $8 \leq n \leq 60$.

**2.** Verfahren gemäß Anspruch 1, wobei $R_1$ eine Struktur gemäß Formel (II) aufweist:

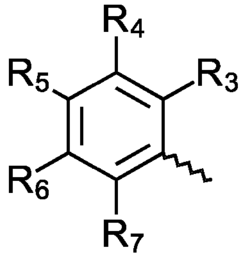

(II)

mit

$R_3$, $R_4$, $R_5$, $R_6$, $R_7$ unabhängig voneinander ausgewählt aus der Gruppe bestehend aus Wasserstoff, linearen

oder verzweigten Alkylgruppen mit 1 bis 22 Kohlenstoff-Atomen, cycloaliphatischen Gruppen enthaltend 3 bis 22 Kohlenstoff-Atome und substituierten oder unsubstituierten Arylgruppen mit 6 bis 16 Kohlenstoff-Atomen, wobei bevorzugt

$R_3$, $R_5$, $R_7$ unabhängig voneinander ausgewählt sind aus der Gruppe bestehend aus Wasserstoff, linearen oder verzweigten Alkylgruppen mit 1 bis 22 Kohlenstoff-Atomen, cycloaliphatischen Gruppen enthaltend 3 bis 22 Kohlenstoff-Atome und substituierten oder unsubstituierten Arylgruppen mit 6 bis 16 Kohlenstoff-Atomen und

$R_4$ und $R_6$ Wasserstoff ist.

**3.** Verfahren gemäß Anspruch 1 oder 2, wobei:

$R_3$, $R_5$, $R_7$ unabhängig voneinander ausgewählt sind aus der Gruppe bestehend aus linearen oder verzweigten Alkylgruppen mit 1 bis 10 Kohlenstoff-Atomen und substituierten oder unsubstituierten Arylgruppen mit 6 bis 12 Kohlenstoff-Atomen

und

$R_4$ und $R_6$ Wasserstoff ist.

**4.** Verfahren gemäß einem der Ansprüche 1 bis 3, wobei $R_1$ eine Struktur gemäß Formel (III), (IV) oder (V) aufweist:

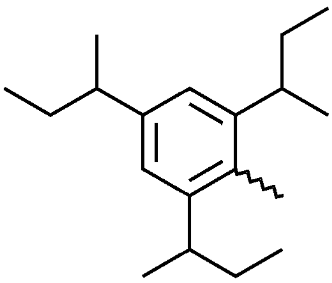

(III)

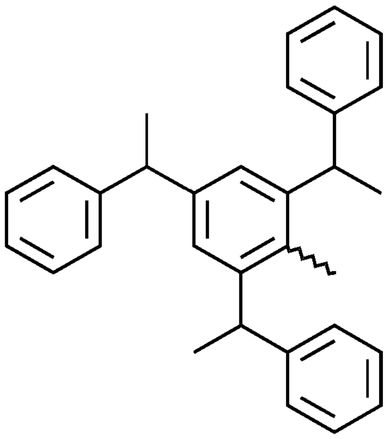

(IV)

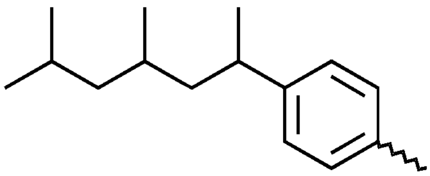

(V)

**5.** Verfahren gemäß einem der Ansprüche 1 bis 4, wobei die Verbindung (1) eine Struktur gemäß Formel (VI), (VII) und/oder (VIII) aufweist:

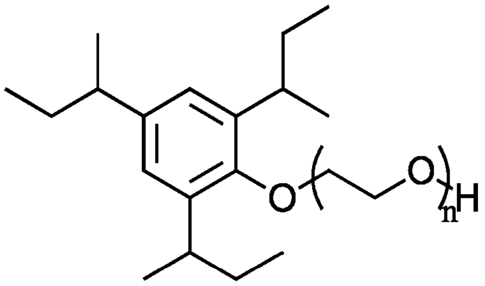

(VI)

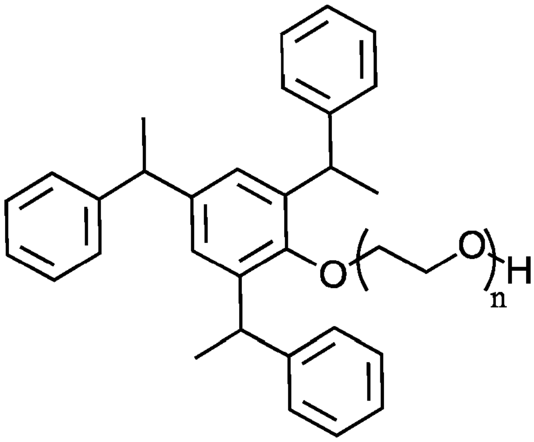

(VII)

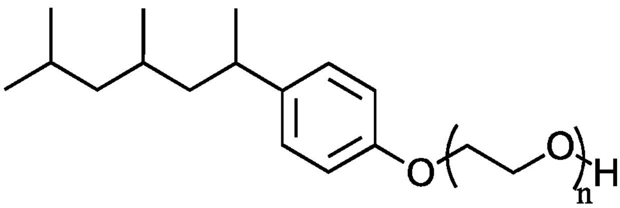

(VIII)

mit $n \geq 1$, bevorzugt $5 \leq n \leq 80$, besonders bevorzugt $7 \leq n \leq 70$, ganz besonders bevorzugt $8 \leq n \leq 60$.

**6.** Verfahren gemäß einem der Ansprüche 1 bis 5, wobei Doppelmetallcyanid-Verbindungen der Formel (XIV) in dem DMC-Kataly¬sator enthalten sind

$$M_X[M'_{X'}(CN)_y]_z \qquad (XIV),$$

und M ausgewählt ist aus einem oder mehreren Metallkationen der Gruppe bestehend aus Zn(II), Fe(II), Ni(II), Mn(II), Co(II), Sr(II), Sn(II), Pb(II) und Cu(II), bevorzugt Zn(II), Fe(II), Co(II) und Ni(II),
und
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V) bevorzugt Co(III), Fe(III), Cr(III) und Ir(III),
und
x, x', y und z ganzzahlig sind und so gewählt werden, dass die Elektronenneutralität der Doppelmetallcyanid-Verbindung gegeben ist, wobei bevorzugt x = 3, x' = 1, y = 6 und z = 2 gilt.

**7.** Verfahren gemäß einem der Ansprüche 1 bis 6, wobei die Doppelmetallcyanid-Verbindung eine oder mehrere

Verbindung(en) ist und ausgewählt wird aus der Gruppe bestehend aus Zinkhexacyano¬cobaltat(III), Zink¬hexacyanoiridat(III), Zinkhexacyanoferrat(III) und Cobalt(II)hexa¬cyanocobaltat(III), be¬vorzugt Zinkhexacyanocobaltat(III).

**8.** Verfahren gemäß einem der Ansprüche 1 bis 7, wobei das Metallcyanidsalz eine oder mehrere Verbindung(en) ist und ausgewählt wird aus der Gruppe bestehend aus Kaliumhexacyanocobaltat(III), Kaliumhexacyanoferrat(II), Kaliumhexacyano-ferrat(III), Calciumhexacyanocobaltat(III) und Lithiumhexacyanocobaltat(III).

**9.** Verfahren gemäß einem der Ansprüche 1 bis 8, wobei der organische Komplexligand eine oder mehrere Verbindung(en) ist und ausgewählt wird aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, bevorzugt tert.-Butanol.

**10.** Verfahren gemäß einem der Ansprüche 1 bis 9, wobei die komplexbildende Komponente weiterhin eine Verbindung (2) enthält, wobei die Verbindung (2) ein Polyether, bevorzugt ein Polyetherpolyol ist.

**11.** Verfahren gemäß Anspruch 10, wobei das Stoffmengenverhältnis der Verbindung (1) zur Verbindung (2) von 50 zu 1 bis 1 zu 50, bevorzugt 20 zu 1 bis 1 zu 20 beträgt.

**12.** Verfahren gemäß einem der Ansprüche 1 bis 11, wobei die Umsetzung in Schritt i) unter Einsatz einer Mischdüse, bevorzugt eines Strahldispergators erfolgt.

**13.** Verfahren gemäß einem der Ansprüche 1 bis 12, wobei eine Prozesstemperatur der Dispersion bei der Umsetzung in Schritt i) zwischen 26°C und 49°C, bevorzugt zwischen 28 °C und 47 °C, besonders bevorzugt zwischen 29 °C und 42 °C und ganz besonders bevorzugt zwischen 30 °C und 40 °C verwendet wird.

**14.** Doppelmetallcyanid-Katalysator (DMC) erhältlich nach einem der Ansprüche 1 bis 13.

**15.** Verwendung eines Doppelmetallcyanid-Katalysators (DMC) gemäß Anspruch 14 zur Herstellung von Polyoxyalkylenpolyolen, bevorzugt Polyetherpolyolen und/oder Polyethercarbonatpolyolen.

## Claims

**1.** Process for preparing a double metal cyanide catalyst (DMC) comprising

i) reacting an aqueous solution of a cyanide-free metal salt, an aqueous solution of a metal cyanide salt, an organic complex ligand and a complex-forming component, **characterized in that** the complex-forming component contains one or more compounds (1) of formula (I):

$$R_1\text{-O-}(R_2\text{-O})_n\text{-H} \qquad \text{(I)}$$

where

$R_1$ is a substituted or unsubstituted aryl group,
$R_2$ is an alkylene group, preferably an ethylene group or isopropylene group, particularly preferably ethylene group (Et), and
$n \geq 1$, preferably $5 \leq n \leq 80$, particularly preferably $7 \leq n \leq 70$, very particularly preferably $8 \leq n \leq 60$.

**2.** Process according to Claim 1, wherein $R_1$ has a structure according to formula (II):

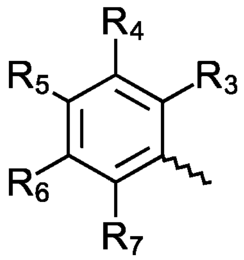

(II)

where

$R_3$, $R_4$, $R_5$, $R_6$, $R_7$ are independently of one another selected from the group consisting of hydrogen, linear or branched alkyl groups having 1 to 22 carbon atoms, cycloaliphatic groups containing 3 to 22 carbon atoms and substituted or unsubstituted aryl groups having 6 to 16 carbon atoms,
wherein preferably
$R_3$, $R_5$, $R_7$ are independently of one another selected from the group consisting of hydrogen, linear or branched alkyl groups having 1 to 22 carbon atoms, cycloaliphatic groups containing 3 to 22 carbon atoms and substituted or unsubstituted aryl groups having 6 to 16 carbon atoms and
$R_4$ and $R_6$ are hydrogen.

**3.** Process according to Claim 1 or 2, wherein:

$R_3$, $R_5$, $R_7$ are independently of one another selected from the group consisting of linear or branched alkyl groups having 1 to 10 carbon atoms and substituted or unsubstituted aryl groups having 6 to 12 carbon atoms and $R_4$ and $R_6$ are hydrogen.

**4.** Process according to any of Claims 1 to 3, wherein $R_1$ has a structure according to formula (III), (IV) or (V) :

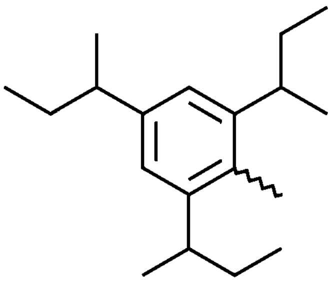

(III)

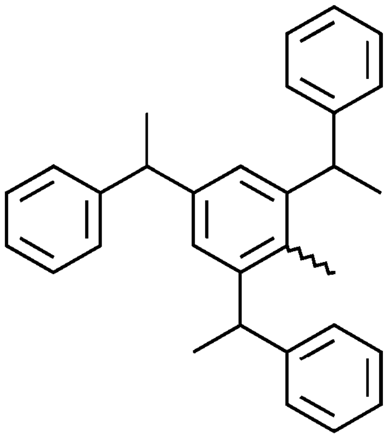

(IV)

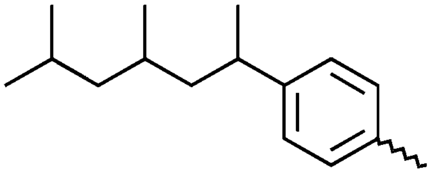

(V)

**5.** Process according to any of Claims 1 to 4, wherein the compound (1) has a structure according to formula (VI), (VII) and/or (VIII):

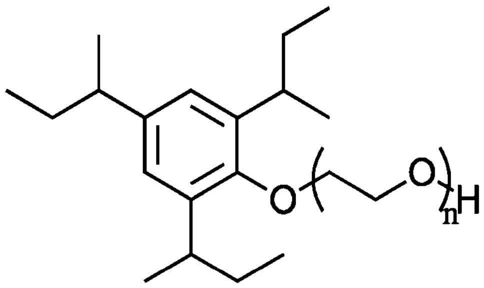

(VI)

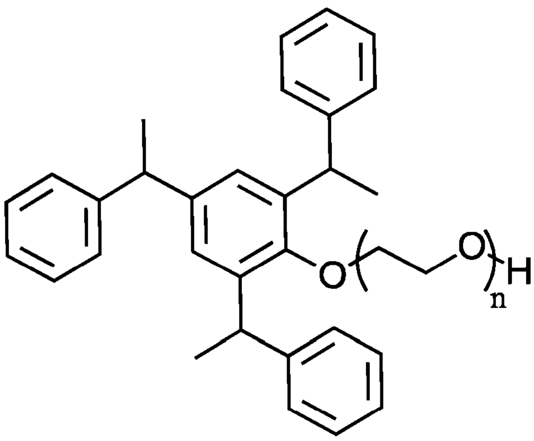

(VII)

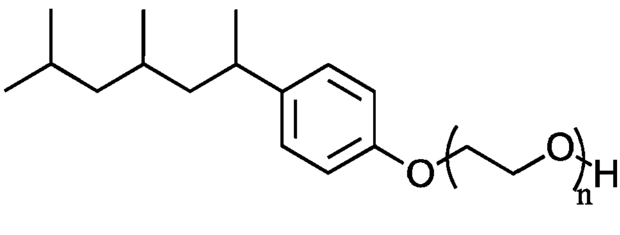

(VIII)

where n ≥ 1, preferably 5 ≤ n ≤ 80, particularly preferably 7 ≤ n ≤ 70, most preferably 8 ≤ n ≤ 60.

**6.** Process according to any of Claims 1 to 5, wherein double metal cyanide compounds of formula (XIV) are present in the DMC-catalyst

$M_x [M'_x, (CN)_y]_z$ (XIV),

and M is selected from one or more metal cations of the group consisting of Zn(II), Fe(II), Ni(II), Mn(II), Co(II),

Sr(II), Sn(II), Pb(II) and Cu(II), preferably Zn(II), Fe(II), Co(II) and Ni(II),
and
M' is selected from one or more metal cations of the group consisting of Fe(II), Fe(III), Co(II), Co(III), Cr(II), Cr(III), Mn(II), Mn(III), Ir(III), Ni(II), Rh(III), Ru(II), V(IV) and V(V), preferably Co(III), Fe(III), Cr(III) and Ir(III),
and
x, x', y and z are integers and are selected so as to ensure the electronic neutrality of the double metal cyanide compound, wherein preferably x = 3, x' = 1, y = 6 and z = 2.

**7.** Process according to any of Claims 1 to 6, wherein the double metal cyanide compound is one or more compounds selected from the group consisting of zinc hexacyanocobaltate(III), zinc hexacyanoiridate(III), zinc hexacyanoferrate(III) and cobalt(II) hexacyanocobaltate(III), preferably zinc hexacyanocobaltate(III).

**8.** Process according to any of Claims 1 to 7, wherein the metal cyanide salt is one or more compounds selected from the group consisting of potassium hexacyanocobaltate(III), potassium hexacyanoferrate(II), potassium hexacyanoferrate(III), calcium hexacyanocobaltate(III) and lithium hexacyanocobaltate(III).

**9.** Process according to any of Claims 1 to 8, wherein the organic complex ligand is one or more compounds selected from the group consisting of dimethoxyethane, tert-butanol, 2-methyl-3-buten-2-ol, 2-methyl-3-butyn-2-ol, ethylene glycol mono-tert-butyl ether and 3-methyl-3-oxetanemethanol, preferably tert-butanol.

**10.** Process according to any of Claims 1 to 9, wherein the complex-forming component further contains a compound (2), wherein the compound (2) is a polyether, preferably a polyether polyol.

**11.** Process according to Claim 10, wherein the molar ratio of compound (1) to compound (2) is from 50:1 to 1:50, preferably 20:1 to 1:20.

**12.** Process according to any of Claims 1 to 11, wherein the reaction in step i) is carried out using a mixing nozzle, preferably a jet disperser.

**13.** Process according to any of Claims 1 to 12, wherein the employed process temperature of the dispersion during the reaction in step i) is between 26°C and 49°C, preferably between 28°C and 47°C, particularly preferably between 29°C and 42°C and very particularly preferably between 30°C and 40°C.

**14.** Double metal cyanide catalyst (DMC) obtainable in accordance with any of Claims 1 to 13.

**15.** Use of a double metal cyanide catalyst (DMC) according to Claim 14 for the preparation of polyoxyalkylene polyols, preferably polyether polyols and/or polyethercarbonate polyols.

## Revendications

**1.** Procédé de préparation d'un catalyseur de cyanure métallique double (DMC) comprenant

i) la mise en réaction d'une solution aqueuse d'un sel métallique exempt de cyanure, d'une solution aqueuse d'un sel de cyanure métallique, d'un ligand complexant organique ainsi que d'un composant complexant, **caractérisé en ce que** le composant complexant contient un ou plusieurs composés (1) de la formule (I) :

$$R_1\text{-O-}(R_2\text{-O})_n\text{-H} \qquad \text{(I)}$$

avec

$R_1$ représentant un groupe aryle substitué ou non substitué,
$R_2$ représentant un groupe alkylène, de préférence un groupe éthylène ou un groupe isopropylène, de manière particulièrement préférée un groupe éthylène (Et), et
$n \geq 1$, de préférence $5 \leq n \leq 80$, de manière particulièrement préférée $7 \leq n \leq 70$, de manière tout particulièrement préférée $8 \leq n \leq 60$.

**2.** Procédé selon la revendication 1, dans lequel $R_1$ présente une structure selon la formule (II) :

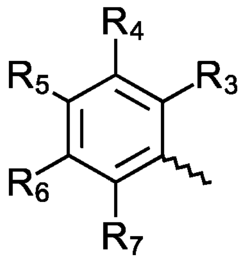

(II)

avec

$R_3$, $R_4$, $R_5$, $R_6$, $R_7$ étant choisis indépendamment les uns des autres dans le groupe constitué par l'hydrogène, des groupes alkyle linéaires ou ramifiés contenant 1 à 22 atomes de carbone, des groupes cycloaliphatiques contenant 3 à 22 atomes de carbone et des groupes aryle substitués ou non substitués contenant 6 à 16 atomes de carbone,
où de préférence
$R_3$, $R_5$, $R_7$ sont choisis indépendamment les uns des autres dans le groupe constitué par l'hydrogène, des groupes alkyle linéaires ou ramifiés contenant 1 à 22 atomes de carbone, des groupes cycloaliphatiques contenant 3 à 22 atomes de carbone et des groupes aryle substitués ou non substitués contenant 6 à 16 atomes de carbone
et
$R_4$ et $R_6$ sont hydrogène.

3. Procédé selon la revendication 1 ou 2, dans lequel :

$R_3$, $R_5$, $R_7$ sont choisis indépendamment les uns des autres dans le groupe constitué par des groupes alkyle linéaires ou ramifiés contenant 1 à 10 atomes de carbone et des groupes aryle substitués ou non substitués contenant 6 à 12 atomes de carbone.
et
$R_4$ et $R_6$ sont hydrogène.

4. Procédé selon l'une des revendications 1 à 3, **caractérisé en ce que** $R_1$ présente une structure selon la formule (III), (IV) ou (V) :

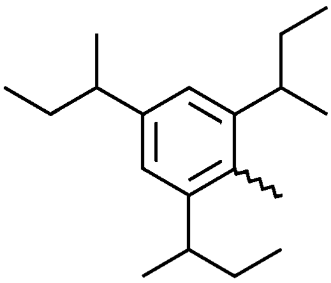

(III)

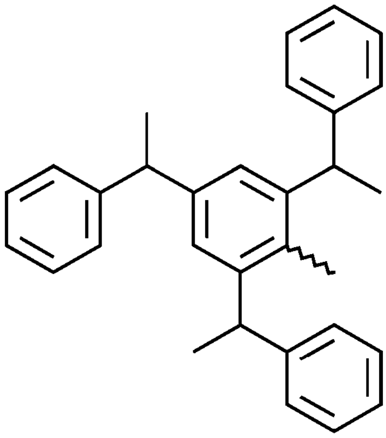

(IV)

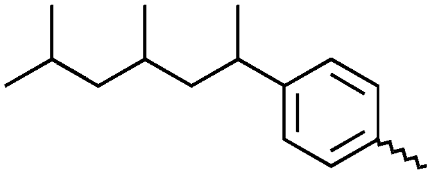

(V)

**5.** Procédé selon l'une des revendications 1 à 4, dans lequel le composé (1) présente une structure selon la formule (VI), (VII) et/ou (VIII) :

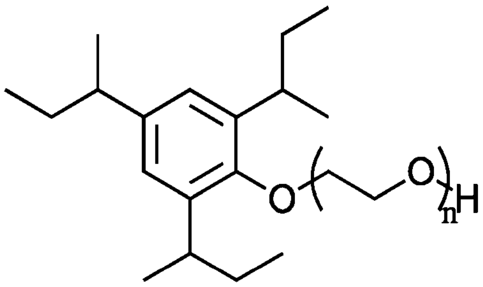

(VI)

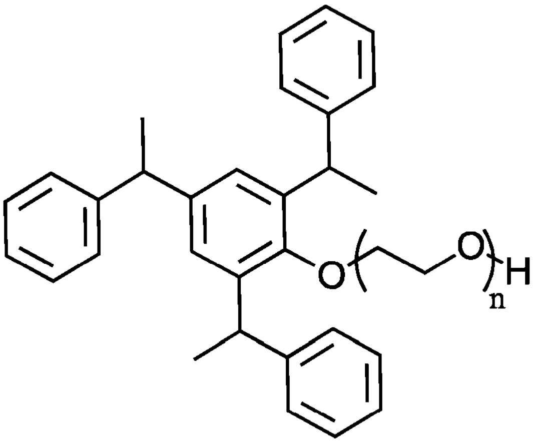

(VII)

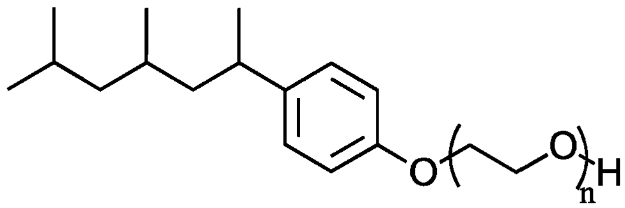

(VIII)

avec n ≥ 1, de préférence 5 ≤ n ≤ 80, de manière particulièrement préférée 7 ≤ n ≤ 70, de manière tout particulièrement préférée 8 ≤ n ≤ 60.

**6.** Procédé selon l'une des revendications 1 à 5, dans lequel des composés de cyanure métallique double de formule (XIV) sont contenus dans le catalyseur DMC

$$M_x[M'_{x'}, (CN)_y]_z \quad (XIV),$$

et M est choisi parmi un ou plusieurs cations métalliques du groupe constitué par Zn(II), Fe(II), Ni(II), Mn(II), Co(II), Sr(II), Sn(II), Pb (II) et Cu(II), de préférence Zn(II), Fe(II), Co (II) et Ni (II),
et
M' est choisi parmi un ou plusieurs cations métalliques du groupe constitué par Fe(II), Fe(III), Co(II), Co(III), Cr(II), Cr(III), Mn(II), Mn(III), Ir(III), Ni(II), Rh(III), Ru(II), V(IV) et V(V), de préférence Co(III), Fe(III), Cr(III) et Ir(III),
et
x, x', y et z sont des nombres entiers choisis de telle sorte que la neutralité électronique du composé de cyanure métallique double soit donnée, où de préférence x = 3, x' = 1, y = 6 et z = 2.

**7.** Procédé selon l'une des revendications 1 à 6, dans lequel le composé de cyanure métallique double est un ou plusieurs composés et est choisi dans le groupe constitué par l'hexacyanocobaltate(III) de zinc, l'hexacyanoiridate(III) de zinc, l'hexacyanoferrate(III) de zinc et l'hexacyanocobaltate(III) de cobalt(II), de préférence l'hexacyanocobaltate(III) de zinc.

**8.** Procédé selon l'une des revendications 1 à 7, dans lequel le sel de cyanure métallique est un ou plusieurs composés et est choisi dans le groupe constitué par l'hexacyanocobaltate(III) de potassium, l'hexacyanoferrate(II) de potassium, l'hexacyanoferrate(III) de potassium, l'hexacyanocobaltate(III) de calcium et l'hexacyanocobaltate(III) de lithium.

**9.** Procédé selon l'une des revendications 1 à 8, dans lequel le ligand complexe organique est un ou plusieurs composés et est choisi dans le groupe constitué par le diméthoxyéthane, le tert-butanol, le 2-méthyl-3-butène-2-ol, le 2-méthyl-3-butyn-2-ol, l'éther monotert-butylique d'éthylèneglycol et le 3-méthyl-3-oxétane-méthanol, de préférence le tert-butanol.

**10.** Procédé selon l'une des revendications 1 à 9, dans lequel le composant complexant contient en outre un composé (2), dans lequel le composé (2) est un polyéther, de préférence un polyéther polyol.

**11.** Procédé selon la revendication 10, dans lequel le rapport molaire du composé (1) au composé (2) est de 50 à 1 à 1 à 50, de préférence de 20 à 1 à 1 à 20.

**12.** Procédé selon l'une des revendications 1 à 11, **caractérisé en ce que** la mise en réaction à l'étape i) est effectuée en utilisant une buse de mélange, de préférence un disperseur à jet.

**13.** Procédé selon l'une des revendications 1 à 12, dans lequel une température de processus de la dispersion lors de la mise en réaction à l'étape i) est comprise entre 26 °C et 49 °C, de préférence entre 28 °C et 47 °C, de manière particulièrement préférée entre 29 °C et 42 °C et de manière tout particulièrement préférée entre 30 °C et 40 °C.

**14.** Catalyseur de cyanure métallique double (DMC) pouvant être obtenu selon l'une des revendications 1 à 13.

**15.** Utilisation d'un catalyseur de cyanure métallique double (DMC) selon la revendication 14 pour la préparation de

polyoxyalkylènepolyols, de préférence de polyétherpolyols et/ou de polyéthercarbonatepolyols.

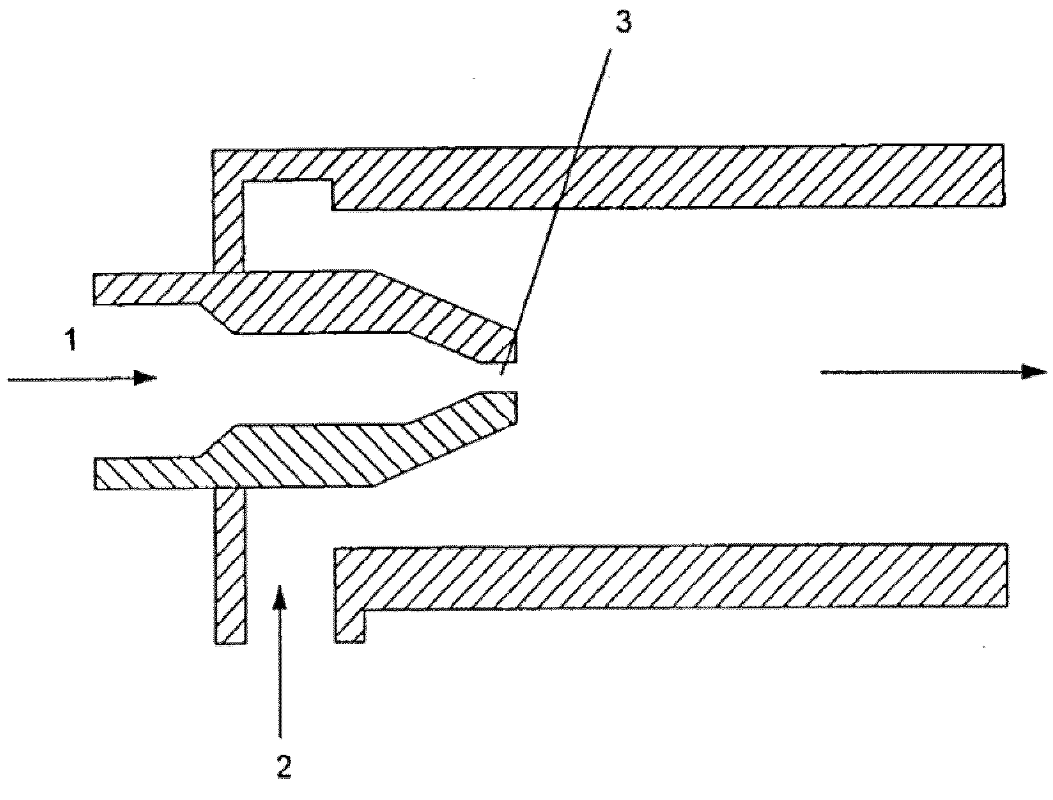


Fig.1

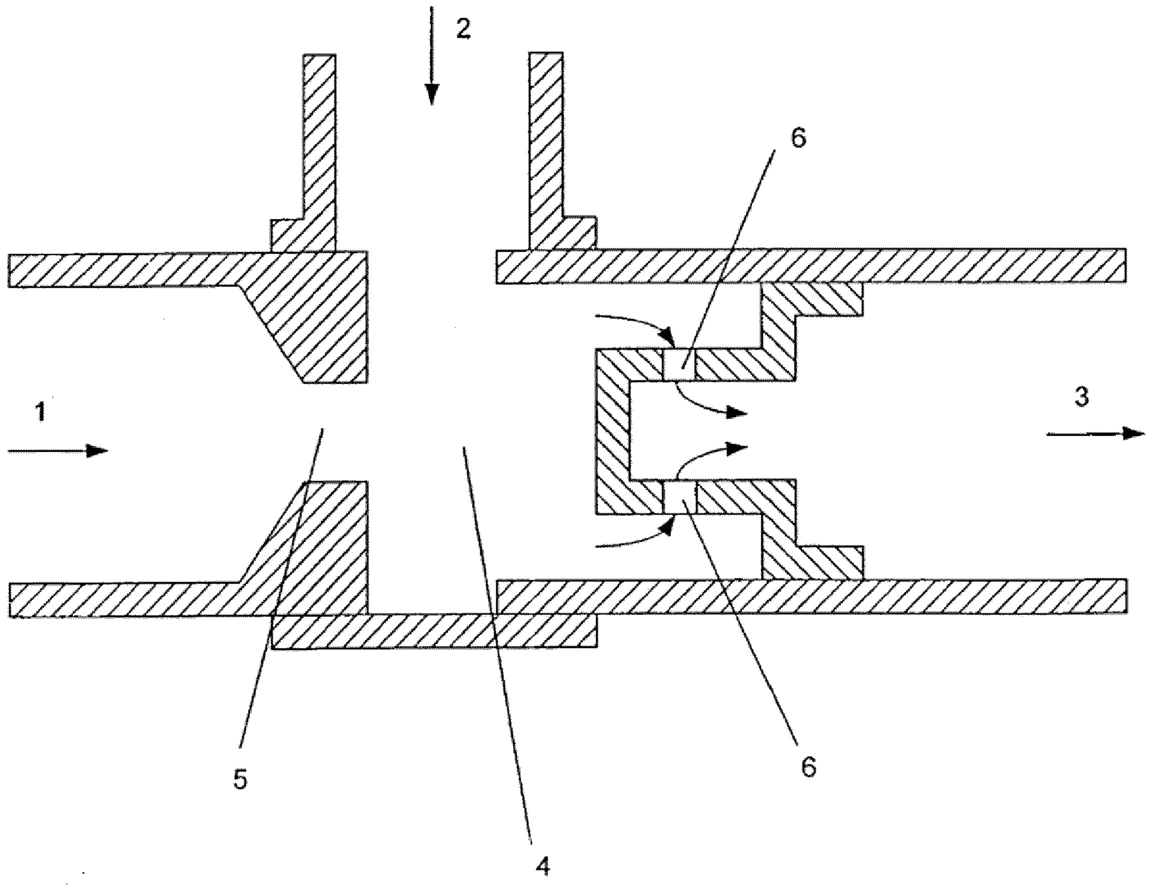


Fig.2

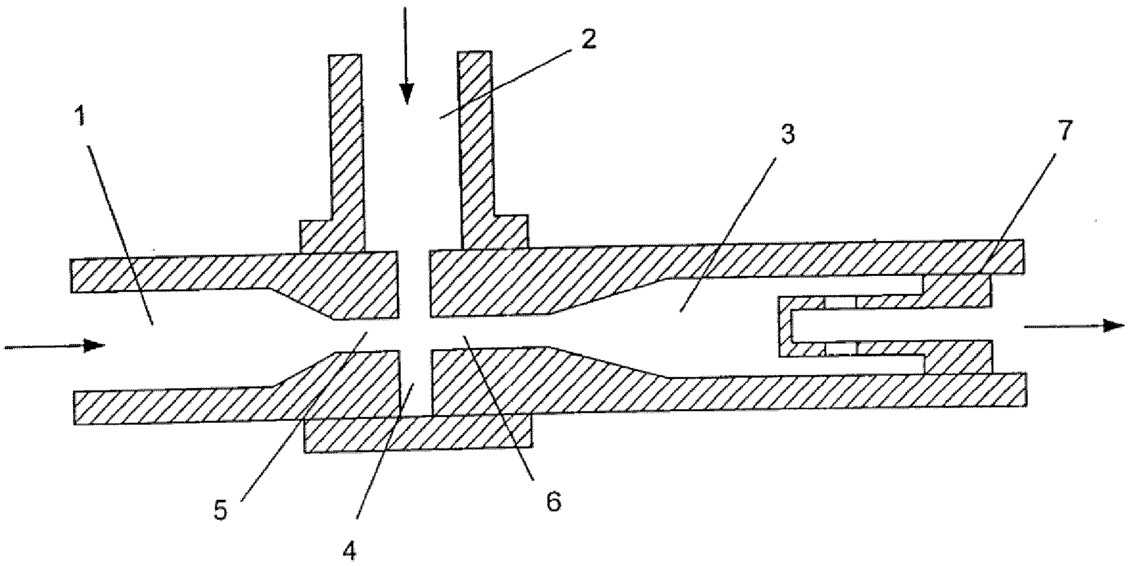


Fig.3

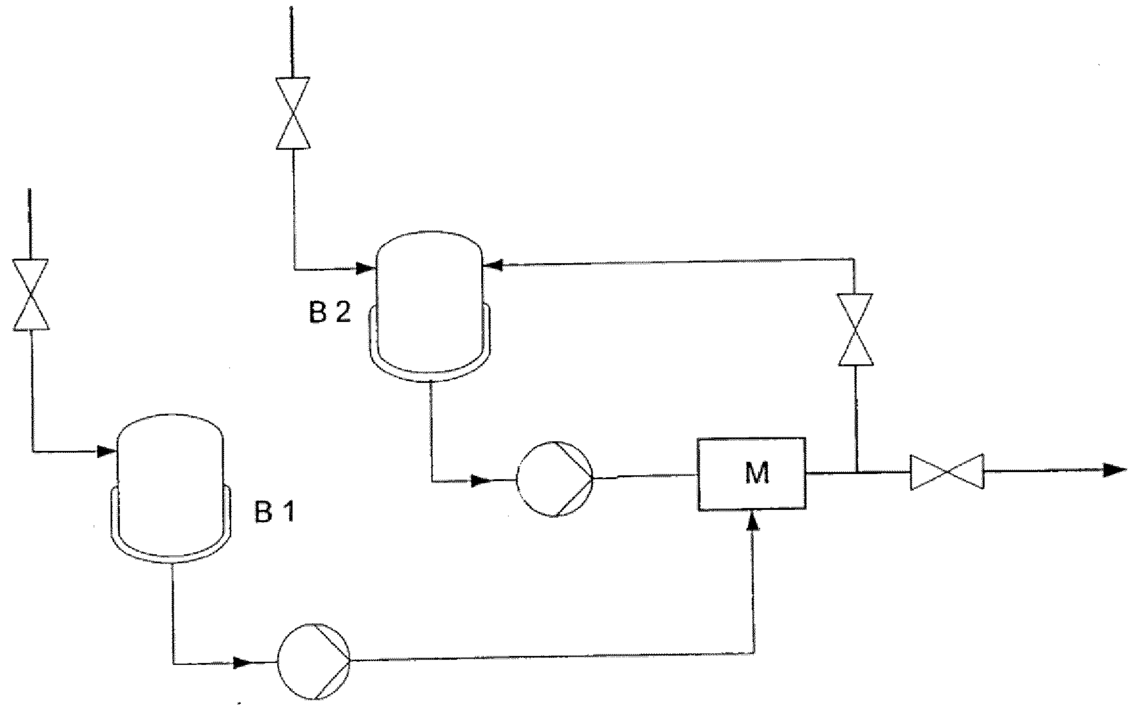


Fig.4

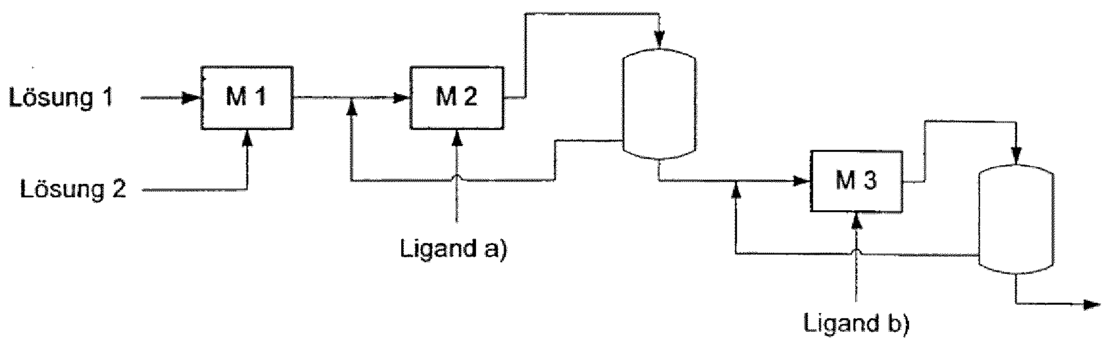


Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- WO 2021165283 A1
- WO 0139883 A1
- WO 0180994 A1
- EP 700949 A2
- WO 2021148272 A1
- WO 9816310 A1
- JP 4145123 B
- WO 9946042 A


### In der Beschreibung aufgeführte Nicht-Patentliteratur


- Ullmann’s Encyclopedia of Industrial Chemistry. VCH, 1988, vol. 2
- Handbuch der industriellen Fest/Flüssig-Filtration. Wiley-VCH Verlag GmbH, 2000